# EUROPEAN PATENT APPLICATION

(11) **EP 4 765 905 A1**
(43) Date of publication of application: **24.06.2026**
(21) Application number: 25222872.1
(22) Date of filing: 12.12.2025
(51) Int. Cl.: H04W 8/22, H04W 8/24, H04W 36/00, H04W 36/08, H04W 72/0453, H04W 72/23, H04W 72/51, H04W 68/02, H04W 92/20, H04W 92/04

(54) **METHODS, APPARATUSES AND NON-TRANSITORY COMPUTER READABLE MEDIUMS FOR PAGING USER EQUIPMENT (UE)**

(30) Priority: 23.12.2024 US 202463738016 P
(71) Applicant: Nokia Technologies Oy, 02610 Espoo (FI)
(72) Inventor: KOSKINEN, Jussi-Pekka, Oulu (FI); BLUSZCZ, Jakub Janusz, Zabrze (PL); PLOTEK, Szymon, Siemianice (PL)
(74) Representative: Nokia EPO representatives

(57) **Abstract**

A first radio access network element, including at least one processor; and at least one memory storing computer program code, the at least one processor, when executing the computer program code, is configured to cause the first radio access network element to, transmit a message to at least one of a second radio access network element or a core network element, wherein the message indicates support information, the support information indicating one or more receive capabilities supported by a user equipment (UE) for one or more frequency bands supported by the UE.

## Description

### TECHNICAL FIELD

This application relates generally to methods, apparatuses and non-transitory computer readable mediums for paging user equipment (UE).

### BACKGROUND

A message, such as a user equipment (UE) radio paging information message, may be used to transfer paging information, such as radio paging information, to and from a core network and between base stations.

### SUMMARY

The scope of protection sought for various example embodiments are set out by the independent claims. Some example embodiments and/or features, if any, described in this specification that do not fall under the scope of the independent claims are to be interpreted as examples useful for understanding various example embodiments.

Some example embodiments provide methods, apparatuses, and non-transitory computer readable mediums for paging user equipment (UE).

In at least one example embodiment a first radio access network element may include at least one processor; and at least one memory storing computer program code, the at least one processor, when executing the computer program code, is configured to cause the first radio access network element to, transmit a message to at least one of a second radio access network element or a core network element, wherein the message indicates support information, the support information indicating one or more receive capabilities supported by a user equipment (UE) for one or more frequency bands supported by the UE.

In at least one example embodiment, the one or more receive capabilities comprises at least one of a number of receiver branches supported by an enhanced reduced capability (eRedCap) UE, or a reduced capability (RedCap) UE and information on whether the UE is a 2Rx XR UE.

In at least one example embodiment, the at least one processor is configured to cause the first radio access network element to send paging messages to the UE according to the one or more receive capabilities supported by the UE for the one or more frequency bands supported by the UE.

In at least one example embodiment, the at least one processor is configured to cause the first radio access network element to receive the support information from the UE.

In at least one example embodiment, the at least one processor is configured to cause the first radio access network element to receive the support information from the second radio access network element, the second radio access network element being a base station.

In at least one example embodiment, the at least one processor is configured to cause the first radio access network element to receive the support information from the core network element.

In at least one example embodiment, the one or more receive capabilities indicates a number of receiver branches supported by the UE for the one or more frequency bands.

In at least one example embodiment, the message includes at least one of, first receiver information indicating a first number of receiver branches supported by the UE for each of the one or more frequency bands; second receiver information indicating a second number of receiver branches supported by the UE for each of the one or more frequency bands; or third receiver information indicating support of two receiver branch extended reality by the UE for each of the one or more frequency bands.

In at least one example embodiment, the message includes at least one of, a first indication of whether the first receiver information is consistent across the one or more frequency bands or varies between the one or more frequency bands; a second indication of whether the second receiver information is consistent across the one or more frequency bands or varies between the one or more frequency bands; or a third indication of whether the third receiver information is consistent across the one or more frequency bands or varies between the one or more frequency bands.

In at least one example embodiment, the first number of receiver branches are receiver branches that support enhanced reduced capability by the UE, and the second number of receiver branches are receiver branches that support reduced capability by the UE.

In at least one example embodiment, the at least one processor is configured to cause the first radio access network element to send the message to the second radio access network element.

In at least one example embodiment, the at least one processor is configured to cause the first radio access network element to send the message to the core network element.

In at least one example embodiment, the at least one processor is configured to cause the first radio access network element to send paging messages to the UE on the one or more frequency bands according to the message.

In at least one example embodiment, the message is a radio paging information message.

In at least one example embodiment, the first radio access network element is a first base station, and the second radio access network element is a second base station.

In at least one example embodiment, a method of operating a first radio access network element may include transmitting a message to at least one of a second radio access network element or a core network element, wherein the message indicates support information, the support information indicating one or more receive capabilities supported by a user equipment (UE) for one or more frequency bands supported by the UE.

In at least one example embodiment, the one or more receive capabilities comprises at least one of a number of receiver branches supported by an enhanced reduced capability (eRedCap) UE, or a reduced capability (RedCap) UE and information on whether the UE is a 2Rx XR UE.

In at least one example embodiment, the method comprises sending paging messages to the UE according to the one or more receive capabilities supported by the UE for the one or more frequency bands supported by the UE.

In at least one example embodiment, the method comprises receiving the support information from the UE.

In at least one example embodiment, the method comprises receiving the support information from the second radio access network element, the second radio access network element being a base station.

In at least one example embodiment, the method comprises receiving the support information from the core network element.

In at least one example embodiment, the one or more receive capabilities indicates a number of receiver branches supported by the UE for the one or more frequency bands.

In at least one example embodiment, the message includes at least one of, first receiver information indicating a first number of receiver branches supported by the UE for each of the one or more frequency bands; second receiver information indicating a second number of receiver branches supported by the UE for each of the one or more frequency bands; or third receiver information indicating support of two receiver branch extended reality by the UE for each of the one or more frequency bands.

In at least one example embodiment, the message includes at least one of, a first indication of whether the first receiver information is consistent across the one or more frequency bands or varies between the one or more frequency bands; a second indication of whether the second receiver information is consistent across the one or more frequency bands or varies between the one or more frequency bands; or a third indication of whether the third receiver information is consistent across the one or more frequency bands or varies between the one or more frequency bands.

In at least one example embodiment, the first number of receiver branches are receiver branches that support enhanced reduced capability by the UE, and the second number of receiver branches are receiver branches that support reduced capability by the UE.

In at least one example embodiment, the method comprises sending the message to the second radio access network element.

In at least one example embodiment, the method comprises sending the message to the core network element.

In at least one example embodiment, the method comprises sending paging messages to the UE on the one or more frequency bands according to the message.

In at least one example embodiment, the message is a radio paging information message.

In at least one example embodiment, the first radio access network element is a first base station, and the second radio access network element is a second base station.

Also described herein is a non-transitory computer readable medium storing computer-executable instruction that, when executed by at least one processor of a system, cause the first radio access network element to, transmit a message to at least one of a second radio access network element or a core network element, wherein the message indicates support information, the support information indicating one or more receive capabilities supported by a user equipment (UE) for one or more frequency bands supported by the UE.

Also described herein is a first radio access network element comprising: means for transmitting a message to at least one of a second radio access network element or a core network element, wherein the message indicates support information, the support information indicating one or more receive capabilities supported by a user equipment (UE) for one or more frequency bands supported by the UE.

One or more example embodiments may also provide a computer program, or computer program product including a computer program, comprising instructions that, when executed by the at least one processor of a user equipment, radio access network element, etc., cause the respective applicable apparatus to perform one or more methods described herein.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limited of the one or more example embodiments.
FIG. 1 is a schematic block diagram illustrating a user equipment, a communication network, and a data network in accordance with an example implementation;
FIG. 2 is a schematic block diagram illustrating a radio access network element in accordance with an example implementation;
FIG. 3 is a flow chart illustrating a method of transmitting a message according to one or more example embodiments;
FIG. 4 is a flow chart illustrating a method of indicating support information in the message of FIG. 3 according one or more example embodiments;
FIG. 5 is a flow chart illustrating a method of indicating the support information in the message of FIG. 4 according to one or more example embodiments;
FIG. 6A is a flow chart illustrating a method of receiving a message according to one or more example embodiments;
FIG. 6B is a flow chart illustrating a method of sending at least one paging message to a user equipment (UE) based on a message according to one or more example embodiments;
FIG. 7 is a flow chart illustrating a method of sending paging message to a user equipment (UE) based on a message according to one or more example embodiments;
FIG. 8 is a flow chart illustrating the method of sending paging message to the UE based on the message of FIG. 7 according to one or more example embodiments;
FIG. 9 is a flow chart illustrating a method of sending paging message to a user equipment (UE) based on a message according to one or more example embodiments;
FIG. 10 is a flow chart illustrating the method of sending the paging message to the UE based on the message of FIG. 8 according to one or more example embodiments;
FIG. 11 is a flow chart illustrating a method of sending paging message to a user equipment (UE) based on a message according to one or more example embodiments;
FIG. 12 is a flow chart illustrating the method of sending the paging message to the UE based on the message of FIG. 10 according to one or more example embodiments;
FIG. 13 is a schematic diagram according to one or more example embodiments;
FIG. 14 is a schematic diagram according to one or more example embodiments;
FIG. 15 is a schematic diagram according to one or more example embodiments;
FIG. 16 is a schematic block diagram illustrating a user equipment in accordance with an example implementation; and
FIG. 17 is pseudo code illustrating a message indicating support information in accordance with an example implementation.

The various features and advantages of the non-limiting example embodiments herein may become more apparent upon review of the detailed description in conjunction with the accompanying drawings. The accompanying drawings are merely provided for illustrative purposes and should not be interpreted to limit the scope of the claims. The accompany drawings are not to be considered as drawn to scale unless explicitly noted. For purposes of clarity, various dimensions of the drawings may have been exaggerated.

### DETALIED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

It should be understood that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

The terminology used herein is for the purposes of describing the various example embodiments only and is not intended to be limiting of the various example embodiments. As used herein, the singular forms "a", "an", and "the" are intended to include the plural forms as well, unless the context clearly indicates otherwise. It will be further understood that the terms "includes", "including", "comprises", and/or "comprising", when used in this specification, specify the presence of stated features, integers, steps, operations, and/or elements, but do not preclude the presence or addition of one or more other features, integers, steps, operations, elements, and/or groups thereof.

It will be appreciated that a number of example embodiments described herein may be used in combination. Features from one or more of the example embodiments may be selected to create alternate implementations comprised of sub-combination of features which may not be explicitly described above. In addition, features from one or more of the example embodiments may be selected and combined to create alternate implementations comprised of a combination of features which may not be explicitly described. Features suitable for such combinations and sub-combinations would be readily apparent to persons of ordinary skill in the art.

At least one example embodiment may be implemented in a communications network including, but not limited to, one or more of the following types of radio access technologies (RATs): World-wide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and enhanced LTE (eLTE), 5G (also called New Radio (NR)), or any future RAT such as 6G. Moreover, communication within the communications network may utilize one or more wireless communication technologies including, but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiplexing (OFDM), and/or Discrete Fourier Transform spread OFDM (DFT-s-OFDM).

As used herein, the term "network device" or "network node" refers to a node in a communications network via which user equipment may access the network and/or which is capable of controlling radio communication and managing radio resources within a cell. The network node or network device may be referred to as a radio access network (RAN) element, a base station (BS), an access point (AP) or an access node. The network device may be, depending on the applied technology, for example, a node B (NodeB or NB), an evolved NodeB (eNodeB or eNB), an NR NB (also referred to as a gNB), a Remote Radio Unit (RRU), a radio head (RH), a remote radio head (RRH), a relay, an Integrated Access and Backhaul (IAB) node, a low power node, a non-terrestrial network (NTN) or non-ground network device such as a satellite network device, a low earth orbit (LEO) satellite or a geosynchronous earth orbit (GEO) satellite, or an aircraft network device.

Moreover, in connection with a split radio access network (RAN), the network device may refer to a centralized unit (CU) of a base station and/or a distributed unit (DU) of a base station. An interface between CU and DU may be referred to as an F1 interface in NR. In the split RAN architecture, node operations may be carried out, at least partly in the CU (*e.g.* a server, host or node) operationally coupled to the DU (*e.g.* a radio head/node). One CU may control one or more DUs, acting at least as transmit/receive (Tx/Rx) nodes. In some embodiments, the DUs may comprise, e.g., a radio link control (RLC), a medium access control (MAC) layer and a physical (PHY) layer, whereas the CU may comprise layers above the RLC layer, such as a packet data convergence protocol (PDCP) layer, a radio resource control (RRC) and an internet protocol (IP) layers. Other functional splits are possible, too. In practice, any processing task may be performed in either the CU or the DU and the boundary where the responsibility is shifted between the CU and the DU may depend on the applied implementation.

The term "terminal device" refers to any end device that may be capable of wireless communication. By way of example, a terminal device may be referred to as a communication device, user equipment (UE), a Subscriber Station (SS), or a Mobile Station (MS). The terminal device may include a mobile phone, a cellular phone, a smart phone, voice over IP (VoIP) phones, wireless local loop phones a tablet, a wearable terminal device, a personal digital assistant (PDA), portable computers, desktop computer, image capture terminal de-vices such as digital cameras, gaming terminal devices, music storage and playback appliances, vehicle-mounted wireless terminal devices, USB dongles, an Internet of Things (IoT) device, a watch or other wearable, a head-mounted dis-play (HMD), a vehicle, a drone, a medical device and applications (e.g., remote surgery), an industrial device and applications (e.g., a robot and/or other wire-less devices operating in an industrial and/or an automated processing chain contexts), a consumer electronics device, a device operating on commercial and/or industrial wireless networks, and the like.

The term "resource," as used herein, may refer to radio resources in time domain, in frequency domain, in space domain, and/or in code domain. Some examples of resources include a physical resource block (PRB), a radio frame, a subframe, a time slot, a subband, a frequency region, a sub-carrier, a beam, etc. The term "transmission" and/or "reception" may refer to wirelessly transmitting and/or receiving via a wireless propagation channel on radio resources.

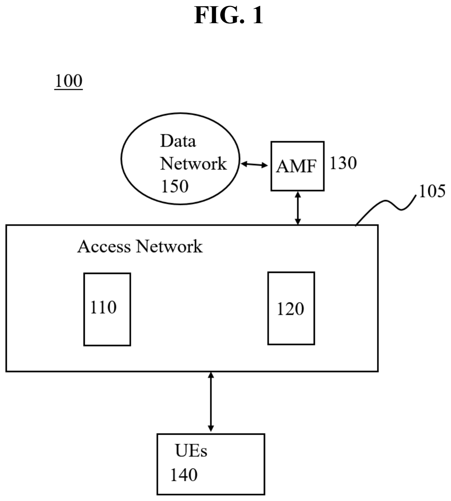

Referring to FIG. 1, an example of a user equipment (UE) 140 that is configured to communicate with a data network 150 via a communication network 100 is shown. The communication network 100 includes an access network 105, a plurality of radio access network elements 110 and 120, a plurality of user equipment (UEs) 140, and a core network 130 that includes one or more network functions. For the sake of illustration, a first radio access network element 110 and a second radio access network element 120 are shown as the plurality of radio access network elements, but more or less radio access network elements may exist. Also, for the sake of illustration, a UE 140 has been shown, but many more UEs may exist. The plurality of UEs may communicate wirelessly with one or more of the plurality of radio access network elements.

The access network 105 provide wireless connectivity (e.g., radio connectivity) to the UE 140 and connects the UE 140 to the core network 130 via a backhaul network. The access network 106 may comprise a Radio Access Network (RAN), a non-terrestrial network (e.g., a satellite network), a wireless local area network (WLAN) or any other type of network that provides wireless connectivity to the UE 140 and connects the UE 140 to the core network 130. The access network 105 provides wireless connectivity (e.g., radio connectivity) to the UE 140 via at least a first radio access network element 110 and/or a second radio access network element 120 of the access network 105. Each of the radio access network elements 110 and 120 may comprise a gNodeB (gNB), an ng-eNodeB (ng-eNB)), an eNodeB (eNB). Each of the radio access network elements 110 and 120 may be an access point, such as a Wireless Local Area Network (WLAN) access point and may provide wireless connectivity to the UE 140. In some implementations, the each of the radio access network elements 110 and 120 may be an access point that provides wired connectivity to the UE 140 (generally referred to as fixed access). The backhaul network between the access network 105 and the core network 130 may comprises a fixed network, a satellite network, or a combination thereof. The core network 130 connects the access network 105 with a data network (DN) 150 via a N6 interface (not shown) of the core network 130. As noted above, the core network 130 comprises network functions (generally referred to as a network function and collectively referred to as network functions). Each respective network function may be implemented as a software running on dedicated hardware (e.g., one or more physical computing devices, such as servers), as a virtualized network function (VNF) instantiated on a physical or virtual machine, or as a container provided by infrastructure of a cloud computing system. Data network 150 may be an external public network, a private data network, or an intra-operator data network (e.g., for providing IP Multimedia Subsystem (IMS) services). The UE 130 (otherwise referred to herein as a mobile terminal) may be configured to access the radio access network elements 110 and 120, register with the core network 130, establish one or more data sessions with the core network 130, and access services provided by the core network 130 and/or application functions (not shown) hosted on application servers (not shown) of the data network 150.

As shown in FIG. 1, a core network (CN) 130 has a service based architecture. The network functions of the core network 130 include at least an access and mobility function (AMF). The AMF handles access, authorization, authentication of user equipment, UE 140 and manages the mobility of user equipment 140 as the UE 140 moves between different radio access network cells, or locations.

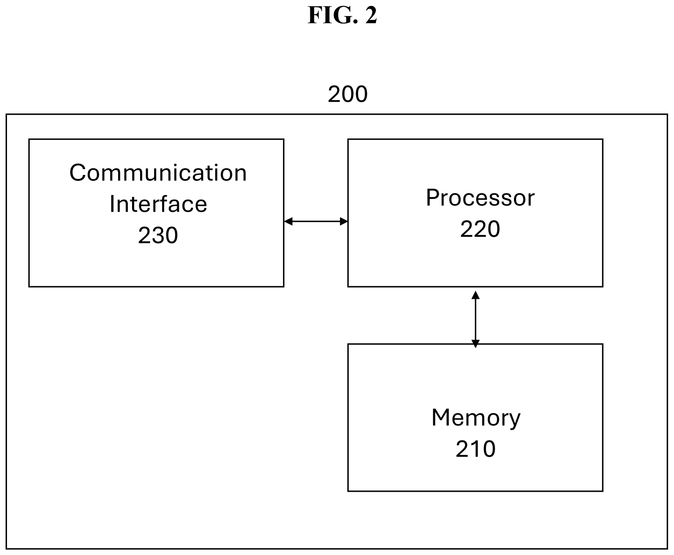

FIG. 2 is a block diagram illustrating a radio access network element according to example embodiments.

Referring to FIG. 2, a radio access network element 200 may include a memory 210, processing circuitry (such as at least one processor 220), and/or a communication interface 230. The memory 210 may include various special purpose program code including computer executable instructions which may cause the radio access network element 200 to perform one or more operations of the example embodiments.

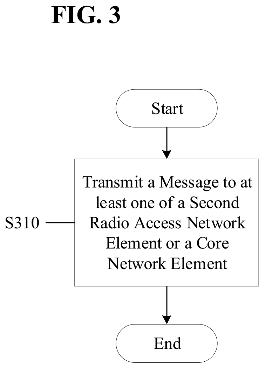

In at least one example embodiments, the processing circuitry may include at least one processor (and/or processor cores, distributed processors, network processors, etc.), such as the at least one processor 220, which may be configured to control one or more elements of the radio access network element 200, and thereby cause the radio access network element 200 to perform various operations such as the operations described below with reference to FIGS. 3-11. The processor circuitry (e.g., the at least one processor 220, etc.) is configured to execute processes by retrieving program code (e.g., computer readable instructions) and data from the memory 210 to process them, thereby executing special purpose control and functions of the entire radio access network element 200. Once the special purpose program instructions are loaded into, (e.g., the at least one processor 220, etc.), the at least one processor 220 executes the special purpose program instructions, thereby transforming the at least one processor 220 into a special purpose processor.

In at least one example embodiment, the memory 210 may be a non-transitory computer-readable storage medium and may include a random access memory (RAM), a read only memory (ROM), and/or a permanent mass storage device such as a disk drive or a solid state drive. Stored in the memory 210 is program code (e.g., computer readable instructions) related to operating the radio access network element 200.

The communication interface 230 may be a network interface for communication between network elements (e.g., management, radio access, etc.) over an interface such as F1-C, F1-U, E1, Xn, XnAP, etc. Alternatively or additionally, for communication with the UE 140, the communication interface 230 may include a wireless transceiver configured to transmit and receive wireless communications via a wireless communication standards or protocol, which are already in existence or to be developed in the future, such as Universal Mobile Telecommunications System (UMTS), long term evolution (LTE), LTE-Advanced (LTE-A), the fifth generation (5G) New Radio (NR), Wireless Fidelity (Wi-Fi) and Worldwide Interoperability for Microwave Access (WiMAX) standards, NB-IoT, enhanced machine type communication (eMTC), LTE-Machine to Machine (LTE-M) and may employ any suitable communication technologies, including, for example, Multiple-Input Multiple-Output (MIMO), Orthogonal Frequency Division Multiplexing (OFDM), time division multiplexing (TDM), frequency division multiplexing (FDM), code division multiplexing (CDM), Bluetooth, ZigBee, and machine type communication (MTC), enhanced mobile broadband (eMBB), massive machine type communication (mMTC), ultra-reliable low latency communication (URLLC), Carrier Aggregation (CA), Dual Connection (DC), and New Radio Unlicensed (NR-U) technologies.

Referring to FIGS. 1 and 2, any one of the first radio access network element 110 and the second radio access network element 120, shown in FIG. 2, may have the structure of the radio access network element 200 illustrated in FIG. 2.

Referring to FIGS. 1 and 2, during operation, a message (e.g., a UE Radio Paging Information message) may be used to transfer radio paging information between the plurality of radio access network elements 110 and 120 and may be used to upload radio paging information to a core network 130 or download radio paging information from the core network 130. Any one of the plurality of radio access network elements 110 and 120 may also utilize the message to determine how and when paging message(s) should be transmitted or sent to a UE 140.

In TS 38.331, version 18.1.0, Release 18 (published May, 2024), a UE Radio Paging Information message *UERadioPagingInformation* indicates a number of receiver (Rx) branches supported by a user equipment (UE) and information on whether the UE is a two receiver (2Rx) extended reality (XR) UE. However, the UE 140, which may be a reduced capability (RedCap) UE or an enhanced reduced capability (eRedCap) UE, can support one receiver (1Rx) branch operations or two receiver (2Rx) branch operations on all frequency bands supported by the UE 140 or on a subset of bands supported by the UE 140.

Accordingly, various example embodiments described herein provide methods, apparatuses, and/or non-transitory computer readable medium for indicating frequency band specific 1Rx, 2Rx, or 2Rx XR information in a message. In some example embodiments, the message may include the elements of the *UERadioPaginglnformation* message and support information indicating frequency band specific 1Rx, 2Rx, or 2Rx XR information in a message. However, example embodiments are not limited thereto.

FIGS. 3-5 illustrate flow charts for transmitting a message indicating support information according to some example embodiments. For example purposes, the method shown in FIG. 3 will be discussed with regard to the environment shown in FIG. 1. Example embodiments should not, however, be limited to this example.

Referring to FIG. 3, at S310, one of the radio access network elements (e.g., one of the first radio access network element 110 or the second radio access network element 120) may transmit a message indicating support information to another one of the radio access network elements. The support information may be derived by one of the radio access network elements based on User Equipment (UE) capability information. For purposes of explanation only, the method of FIGS. 3-4 will be described with respect to the first radio access network element 110 generating the message, but the description will equally apply to any of the radio access network elements (e.g., any of the first radio access network element 110 and/or second radio access network element 120). As an example, the UE capability information may be known or received by the first radio access network element 110 from a UE 140 as part of a UE capability transfer procedure or a UE capability enquiry. The UE capability information may indicate supported frequency bands by the UE 140, data rates and a number of receiver branches.

Using the UE capability information, the first radio access network element 110 may generate a message indicating support information or may indicate support information in the message. The message may indicate support information, and the support information may indicate one or more receive capabilities supported by the UE 140 for one or more frequency bands supported by the UE 140. In some example embodiments, the support information may be derived based on UE capability information where the UE capability information may directly indicate whether the UE 140 is a 2Rx XR UE, and the first radio access network element 110 may derive at least one of a number of receiver branches supported by the UE 140 for the one or more frequency bands supported by the UE 140. In one example embodiment, the number of receiver branches supported by the UE 140 for the one or more frequency bands supported by the UE 140 may be derived from a maximum number of spatial multiplexing layers supported by the UE 140 for downlink (DL) reception. For example, this information may be indicated as a parameter in the UE capability information such as maxNumberMIMO-LayersPDSCH according to TS 38.306, version 18.1.0, Release 18 (published August, 2024). For example, if the maximum number of spatial multiplexing layers supported by the UE 140 is 2 MIMO layers for one or more frequency bands, then the radio access network element may determine that the number of receiver branches for the one or more frequency bands is 2Rx. If the maximum number of spatial multiplexing layers supported by the UE 140 is absent or is not indicated, then the radio access network element 110 may determine that the number of receiver branches for the one or more frequency bands is 1Rx.

The one or more receive capabilities indicated in the message may include at least one of: a number of receiver (Rx) branches supported by the UE 140; and information on whether the UE 140 is a 2Rx XR UE. The UE 140 may be an enhanced reduced capability UE or a reduced capability UE. As an example, the message may for each frequency band indicate a number of receiver branches such as 1Rx or 2Rx supported by the UE 140, and the generated message may also include information on whether the UE is a 2Rx XR UE.

Still referring to FIG. 1, at S310, the first radio access network element 110 may transmit or send the message to at least one of the second radio access network element 120 or the core network element 130. For example, when the first radio access network element 110 is a gNB, the first radio access network element 110 may transmit or send the message to another gNB. In some example embodiments, when the first radio access network element is a gNB, the first radio access network element 110 may transmit or send the message to the core network 130 for storage in the AMF of the core network 130. As an example, the first radio access network element 110 may transmit or send the message to the core network 130 for storage. The core network 130 may store the message at the AMF.

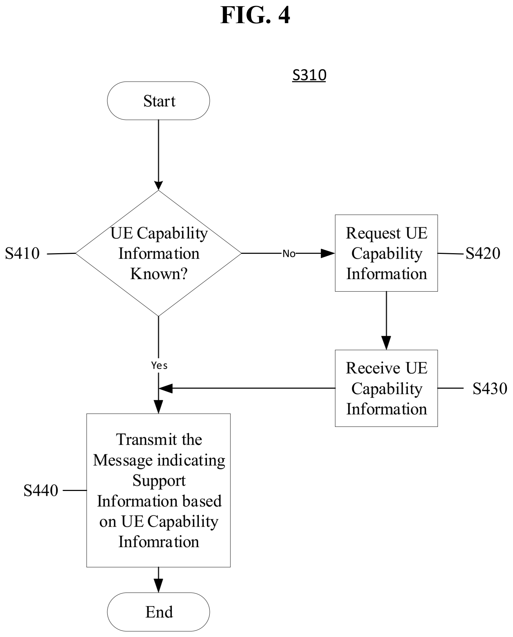

FIG. 4 is a flow chart illustrating an example embodiment of a method for indicating support information in the message transmitted at S310. As with FIG. 3, the example embodiment shown in FIG. 4 will be described with regard to the environment shown in FIG. 1. Example embodiments should not, however, be limited to this example.

Referring to FIG. 4, at S410, the first radio access network element 110 may determine whether the UE capability information is known. If the UE capability information is not known, "No" at S410, then at S420 the first radio access network element 110 may request UE capability information from the UE 140. At S430, the first radio access network element 110 may receive the UE capability information from the UE 140. At S440, the first radio access network element 110 may transmit the message indicating support information based on the UE capability information received at S430. If the UE capability information is known, "Yes" at S410, then at S440 the first radio access network element 110 may transmit the message indicating the support information based on the UE capability information.

The UE capability information at S310, S410, and S430 may directly indicate whether the UE 140 is a 2Rx XR UE, and the radio access network element 110 may derive support information based on the UE capability information. For example, the first radio access network element 110 may derive support information indicating one or more receive capabilities supported by the UE 140 for one or more frequency bands support by the UE 140. The one or more receive capabilities indicating a number of receiver branches supported by the UE 140 for each of the one or more frequency bands supported by the UE 140.

The message transmitted at S440 may further indicate at least one of first receiver information indicating a first number of receiver branches supported by the UE 140 for each of the one or more frequency bands, second receiver information indicating a second number of receiver branches supported by the UE 140 for each of the one or more frequency bands; or third receiver information indicating whether the UE 140 is a 2Rx XR UE for each of the one or more frequency bands.

In at least one example embodiment, the first receiver information may be an indication of a number of enhanced reduced capability receiver branches (e.g., numberOfRxERedCap) supported by the UE 140 for each frequency band. The second receiver information may be an indication of a number of reduced capability receiver branches (e.g., numberofRxRedCap) supported by the UE 140 for each frequency band. The third receiver information may indicate whether the UE 140 is a 2Rx XR UE (e.g., supportOf2RxXR) for each frequency band.

Still referring to FIG. 4, the message generated at S440 may further indicate or include at least one of a first indication of whether the first receiver information is consistent across the one or more frequency bands or varies between the one or more frequency bands; a second indication of whether the second receiver information is consistent across the one or more frequency bands or varies between one or more frequency bands, or a third indication of whether the third receiver information is consistent across the one or more frequency bands or varies between the one or more frequency bands.

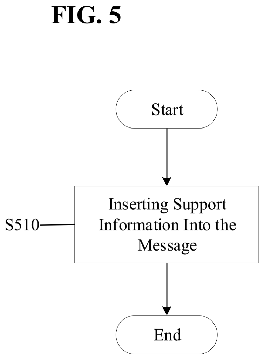

FIG. 5 is a flow chart illustrating a method of indicating the support information in the message at S440 of FIG. 4.

At S510, the first radio access network element 110 may indicate the support information in the message at S440 by insert one or more receive capabilities into the message based on the UE Capability Information into the message. The one or more receive capabilities may include at least one of first receiver information indicating a first number of receiver branches supported by the UE for each of the one or more frequency bands, second receiver information indicating a second number of receiver branches supported by the UE for each of the one or more frequency bands; or third receiver information indicating whether the UE for each of the one or more frequency bands is a 2RxXR UE. For example, a UE may support four receiver branches on some frequency bands, and the indication of whether the UE for each of the one or more frequency bands is a 2Rx XR UE is an indication of whether the UE 140 is exempt from supporting four receiver branches on one or more frequency bands.

Still referring to FIG. 5, at S510 the first radio access network element may further insert or include, in the message, a first indication of whether the first receiver information is consistent across the one or more frequency bands or varies between the one or more frequency bands; a second indication of whether the second receiver information is consistent across the one or more frequency bands or varies between the one or more frequency bands, or a third indication of whether the third receiver information is consistent across the one or more frequency bands or varies between the one or more frequency bands.

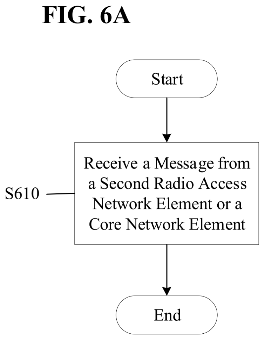

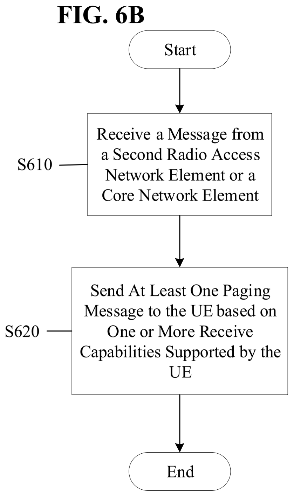

FIG. 6A is a flow chart illustrating a method of receiving a message according to one or more example embodiments. FIG. 6B is a flow chart illustrating a method of sending a paging message to a user equipment (UE) based on a message according to one or more example embodiments. As with FIG. 3, the example embodiment shown in FIGS. 6A-6B will be described with regard to the environment shown in FIG. 1. Example embodiments should not, however, be limited to this example.

Referring to FIG. 6A and 6B, at S610, one of the radio access network elements (e.g., one of the first radio access network element 110 or the second radio access network element 110) may receive a message, such as the message described in accordance with FIGS. 3-5, from another one of the radio access network elements or from the core network element 130. For purposes of explanation only, the method of FIGS. 6A-6B will be described with respect to the first radio access network element 110 receiving a message, but the description will equally apply to any of the radio access network elements.

Referring to FIG. 6A, at 610, the first radio access network element 110 may receive a message from a second radio access network element 120 or from the core network element 130. For example, when the first radio access network element 110 is a gNB, the first radio access network element 110 may receive the message from another gNB over an Xn interface. Alternatively or additionally, the first radio access network element 110 may receive the message from another gNB over an F1 Interface. For example, when the first radio access network element is a gNB, the first radio access network element 110 may receive the message from the core network 130 over a NG interface. For example, if the message is being transmitted between a gNB-CU and another gNB-CU, the message may be received over the Xn interface. If the message is being transmitted between a gNB-CU and a gNB-DU, the message may be received over the F1 interface.

The message may indicate support information, and the support information may indicate one or more receive capabilities supported by a UE 140.. For example, the support information may indicate one or more receive capabilities supported by the UE 140 for one or more frequency bands supported by the UE 140. In one example embodiment, the one or more receive capabilities may be reduced capability supported by the UE 140 or enhanced reduced capability supported by the UE 140 and an indication of whether the UE 140 is a 2Rx XR UE.

Referring to FIG. 6B, in one or more example embodiments, after receiving the message at S610, at S620, the first radio access network element 110 may send at least one paging message to the UE 140 according to the one or more receive capabilities supported by the UE 140 on at least one frequency band. As an example, the paging message may be a paging early indicator (PEI) message. The PEI message may allow the UE 140 to receive an early indication of whether the UE 140 is to monitor for communications, such as paging, from a network. If the PEI message indicates no paging, then the UE 140 can enter a sleep mode. As another example, the first radio access network element 110 may send a signal such as a Low-Power Wake-Up Signal (LP-WUS) to the UE 140 based on the message described in FIGS. 1-5. For example, the LP-WUS signal may be utilized by the radio access network element 110 to cause the UE 140 to enter an active mode.

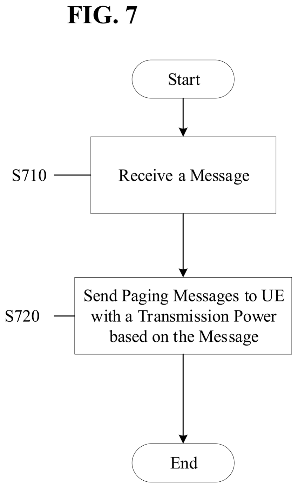

FIG. 7 is a flow chart illustrating an example embodiment of a method for sending paging messages to the UE 140 according to a message. As with FIGS. 6A-6B, the example embodiment shown in FIG. 7 will be described with regard to the environment shown in FIG. 1. Example embodiments should not, however, be limited to this example.

Referring to FIG. 7, at S710, the first radio access network element 110 may receive a message. The message received by the radio access network element 110 may be similar to the message described with reference to FIG. 1-5 above. At S720, the first radio access network element 110 may send or transmit paging messages to the UE 140 at a transmission power level based on the message. The first radio access network element 110 may send or transmit the paging messages to the UE 140 at higher transmission power level or at a lower transmission power level based on the one or more receive capabilities. As an example, the first radio access network element 110 may utilize the support information in the message to send paging messages or transmissions to the UE 140 at a first transmission power level or a second transmission power level, but example embodiments are not limited thereto, and there may be various different transmission power levels.

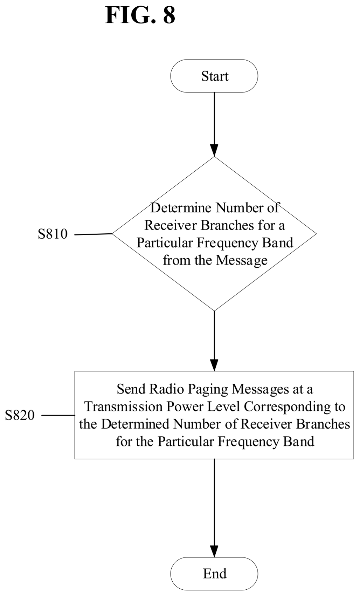

FIG. 8 is a flow chart illustrating an example embodiment of a method for determining a transmission power level for sending paging messages to the UE 140 according to the message at 720. As with FIG. 7, the example embodiment shown in FIG. 8 will be described with regard to the environment shown in FIG. 1. Example embodiments should not, however, be limited to this example.

Referring to FIG. 7, at S810, the first radio access network element 110 may determine, based on the message, a number of receiver branches the UE 140 is operating for a particular frequency band from the message. For example, the first radio access network element 110 may determine whether the UE 140 is operating a first number of receiver branches for a subset of the one or more frequency bands or whether the UE 140 is operating a second number of receiver branches for the subset of the one or more frequency bands based on the message. The first radio access network element 110 may also determine whether the UE 140 is a 2Rx XR for the subset of the one or more frequency bands.

At S820, the first radio access network element 110 may send radio paging messages at a transmission power level corresponding to the determined number of receiver branches for the particular frequency band. For example, at S810, if the first radio access network element 110 determines that the message indicates that the UE is operating the first number of receiver branches for a subset of the one or more frequency bands or that the third receiver information indicates that the UE 140 is a 2Rx XR UE for the subset of the one or more frequency bands, then at S820, the first radio access network element 110 may send or transmit radio paging messages at a first transmission power level.

At S810, if the first radio access network element 110 determines that the message indicates that the UE is operating the second number of receiver branches for the subset of the one or more frequency bands, then at S830, the first radio access network element 110 may send or transmit radio paging messages at a second transmission power level.

The first transmission power level may be different than the second transmission power level, and the first number of receiver branches may be greater than the second number of receiver branches. For example, if the determined number of receiver branches for the subset of the one or more frequency bands is one receiver branch (1Rx), the first radio access network element may transmit the paging messages at a higher transmission power level than if the determination number of receiver branches for the subset of the one or more frequency bands is two receiver branches (2Rx). For example, paging is point-to-multipoint, and the paging messages may contain multiple UE identifiers, thus the transmission power may be based on one or more messages (one per each paged UE).

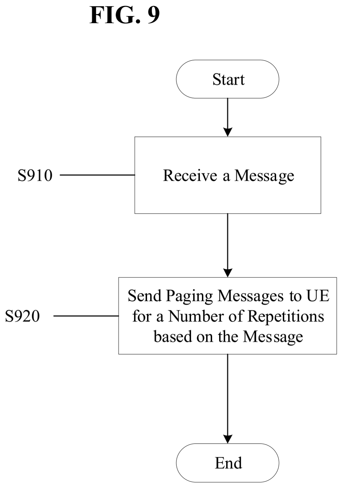

FIG. 9 is a flow chart illustrating another example embodiment of a method for sending paging messages to the UE 140 according to a message. As with FIG. 7, the example embodiment shown in FIG. 9 will be described with regard to the environment shown in FIG. 1. Example embodiments should not, however, be limited to this example.

Referring to FIG. 9, at S910, the first radio access network element 110 may receive a message. The message received by the radio access network element 110 may be similar to the message described with reference to FIG. 1-5 above. At S920, the first radio access network element 110 may send or transmit paging messages to the UE 140 for a number of repetitions based on the message. The first radio access network element 110 may send or transmit the paging messages to the UE 140 with for a higher number of repetitions or for a lower number of repetitions based on the received message. As an example, the first radio access network element 110 may send a paging message repeatedly over a period of time.

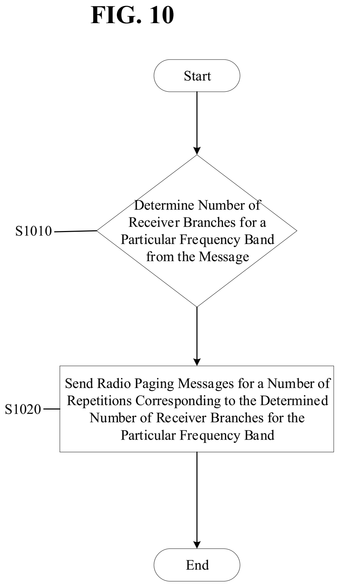

FIG. 10 is a flow chart illustrating a method for determining a number of repetitions for sending paging messages to the UE 140 according to the message at S920. As with FIG. 9, the example embodiment shown in FIG. 10 will be described with regard to the environment shown in FIG. 1. Example embodiments should not, however, be limited to this example.

Referring to FIG. 10, at S1010, the first radio access network element 110 may determine, based on the message, a number of receiver branches the UE 140 is operating for a particular frequency band. For example, the first radio access network element may determine whether the UE 140 is operating a first number of receiver branches for a subset of the one or more frequency bands or whether the UE 140 is operating a second number of receiver branches for the subset of the one or more frequency bands based on the message. The UE may also determine whether the UE 140 is indicated as 2Rx XR UE for the subset of the one or more frequency bands.

At S1020, the first radio access network element 110 may send radio paging messages to the UE 140 for a number of repetitions corresponding to the determined number of receiver branches for the particular frequency band.

For example, at S1010, if the first radio access network element 110 determines that the message indicates that the UE 140 is operating the first number of receiver branches for a subset of the one or more frequency bands or that the third receiver information indicates that the UE 140 is a 2Rx XR UE for the subset of the one or more frequency bands, then at S1020, the first radio access network element 110 may send or transmit radio paging messages for a first number of repetitions.

At S1010, if the first radio access network element 110 determines that the message indicates that the UE is operating the second number of receiver branches for the subset of the one or more frequency bands, then at S1020, the first radio access network element 110 may send or transmit radio paging messages for a second number of repetitions.

The first number of repetitions may be less than the second number of repetitions, and the first number of receiver branches may be greater than the second number of receiver branches.

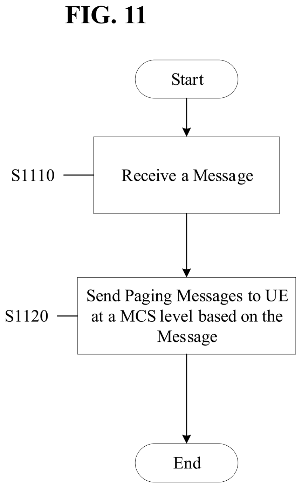

FIG. 11 is a flow chart illustrating yet another example embodiment of a method for sending paging messages to the UE 140 according to a message. As with FIG. 9, the example embodiment shown in FIG. 11 will be described with regard to the environment shown in FIG. 1. Example embodiments should not, however, be limited to this example.

Referring to FIG. 11, at S1011, the first radio access network element 110 may receive a message. The message received by the radio access network element 110 may be similar to the message described with reference to FIG. 1-5 above. At S1120, the first radio access network element 110 may send or transmit paging messages to the UE 140 at a modulation and coding scheme (MCS) level based on the message. The first radio access network element 110 may send or transmit the paging messages to the UE 140 at higher MCS level or at a lower MCS level based on the one or more receive capabilities.

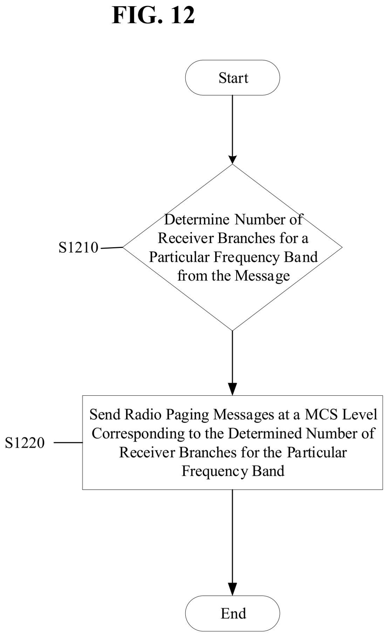

FIG. 12 is a flow chart illustrating a method for determining the MCS level for sending paging messages to the UE 140 according to the message at S1120. As with FIG. 11, the example embodiment shown in FIG. 12 will be described with regard to the environment shown in FIG. 1. Example embodiments should not, however, be limited to this example.

Referring to FIG. 12, at S1210, the first radio access network element 110 may determine, based on the message, a number of receiver branches for a particular frequency band that the UE 140 is operating. For example, the first radio access network element 110 may determine whether the UE 140 is operating a first number of receiver branches for a subset of the one or more frequency bands or whether the UE 140 is operating a second number of receiver branches for the subset of the one or more frequency bands based on the message. The radio access network element 110 may also determine whether the UE 140 is indicated as a 2Rx XR UE for the subset of the one or more frequency bands.

At S1210, if the first radio access network element 110 determines that the message indicates that the UE 140 is operating the first number of receiver branches for a subset of the one or more frequency bands or that the third receiver information indicates that the UE 140 is a 2Rx XR UE for the subset of the one or more frequency bands, then at S1220, the first radio access network element 110 may send or transmit radio paging messages at a first MCS level.

At S1210, if the first radio access network element 110 determines that the message indicates that the UE 140 is operating the second number of receiver branches for the subset of the one or more frequency bands, then at S1220, the first radio access network element 110 may send or transmit radio paging messages at a second MCS level.

The first MCS level may be higher than the second MCS level, and the first number of receiver branches may be greater than the second number of receiver branches.

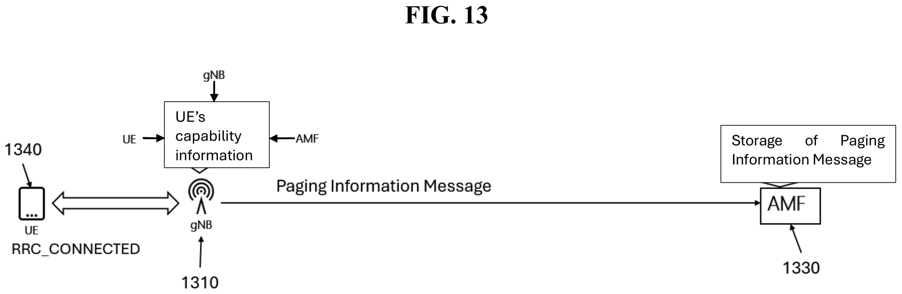

FIG. 13 is a schematic diagram according to one or more example embodiments.

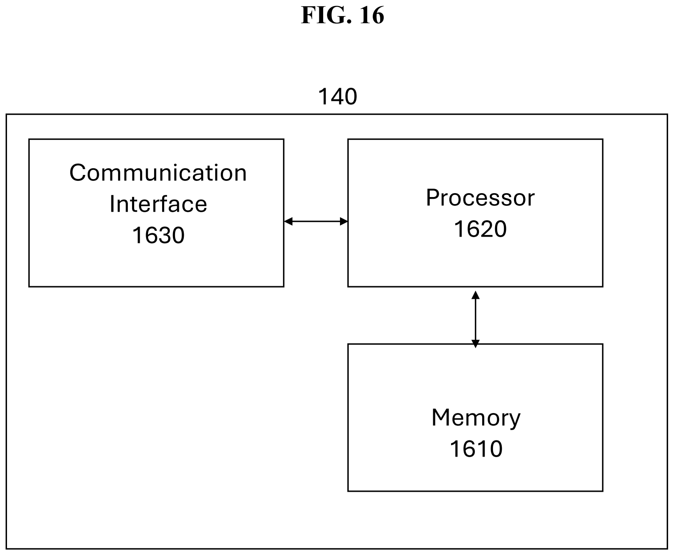

Referring to FIG. 13, a UE 1340 (e.g., similar to UE 140 illustrated in FIGS. 1 and 16) may be in an RRC_CONNECTED state with a gNB 1310 (e.g., similar to first radio access network element 110 in FIGS. 1-2). The gNB 1310 may know a UE's 1340 capability information or may receive the UE's 1340 capability information. For example, gNB 1310 may request the UE 1340 for the UE capability information and may receive the UE capability information in response. The gNB 1310 may also receive the UE capability information from another gNB (e.g., the second radio access network element 120 in FIG. 1) or may receive the UE capability information from an AMF of a core network 1330 (e.g., similar to core network 130 in FIGS. 1-2). The gNB 1310 may derive support information and may indicate one or more receive capabilities supported by the UE 1340 for one or more frequency bands supported by the UE 1340 in a paging information message according to any of the various example embodiments described with reference to FIGS. 1-5. The gNB 1310 may then transmit or send the paging information message to the core network 1330 for storage of paging information message at the AMF of the core network 1330.

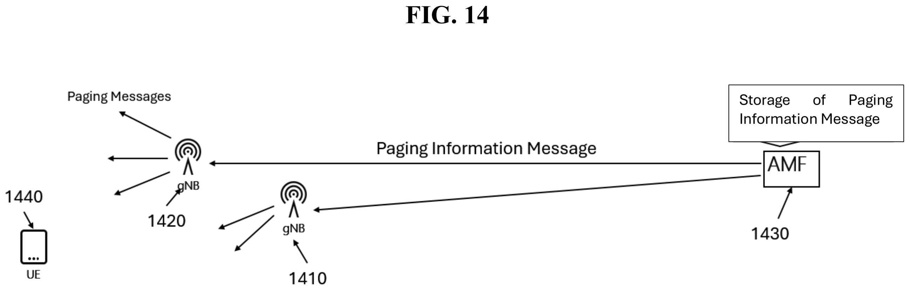

FIG. 14 is a schematic diagram according to one or more example embodiments.

Referring to FIG. 14, a first gNB 1410 and a second gNB 1420 (e.g., radio access network elements 110 and 120 in FIGS. 1-2) may receive a paging information message (e.g., the message described with reference to FIGS. 3-5). Any one of the first gNB 1410 and/or the second gNB 1420 may send paging messages to a UE 1440 (e.g., similar to the UE 140 illustrated in FIG. 1) based on paging information message. The paging information message may be received by the first gNB 1410 and/or the second gNB 1420 from the AMF of the core network 1430 (e.g., similar to the core network 130 described in with reference to FIG. 1). The gNB 1410 and/or the gNB 1420 may page the UE 1440 according to any one of the example embodiments described with reference to FIGS. 6-12.

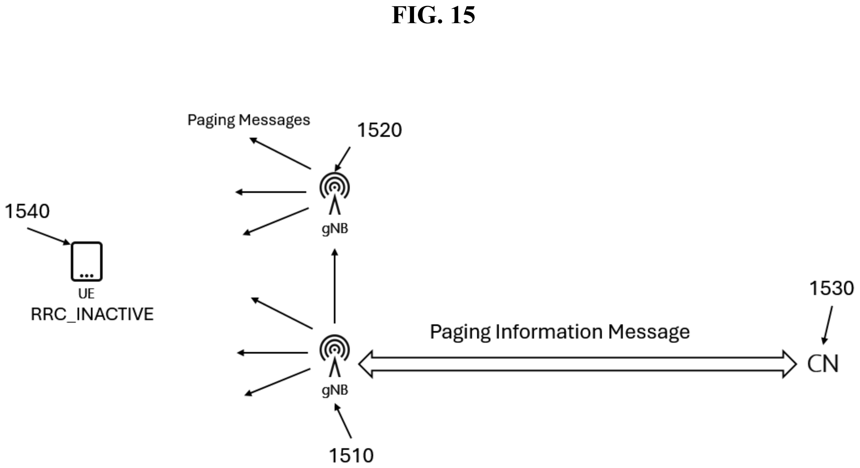

FIG. 15 is a schematic diagram according to one or more example embodiments.

Referring to FIG. 15, when a gNB (e.g., gNB 1520) initiates sending or transmitting paging messages, the gNB 1520 may receive a paging information message from another gNB, such as gNB 1510. In this example embodiment, a core network 1530 may initiate paging the UE 1540, and may therefore send at least one paging message and the paging information message to the gNB 1510 for transmitting or sending the at least one paging message to the UE 1540. For example, the core network 1530 may initiate paging of the UE 1540 when the UE 1540 is in an inactive state, or alternatively in an IDLE state.

FIG. 16 is schematic block diagram of a user equipment (UE) in accordance with an example implementation.

Referring to FIG. 16, an example of user equipment 140 is shown. Although FIG. 16 shows a single instance of each physical and/or logical component of the user equipment 140, the user equipment 140 may include multiple instances of each physical and/or logical component shown in FIG. 3.

The user equipment (UE) 140 may include a memory 1610, processing circuitry (such as at least one processor 1620), and/or a communication interface 1630. The memory 1610 may include various special purpose program code including computer executable instructions which may cause the UE 140 to perform one or more operations of the example embodiments.

In at least one example embodiments, the processing circuitry may include at least one processor (and/or processor cores, distributed processors, network processors, etc.), such as the at least one processor 1620, which may be configured to control one or more elements of the UE 140, and thereby cause the UE 140 to perform various operations. The processor circuitry (e.g., the at least one processor 1620, etc.) is configured to execute processes by retrieving program code (e.g., computer readable instructions) and data from the memory 1610 to process them, thereby executing special purpose control and functions of the entire UE 140. Once the special purpose program instructions are loaded into, (e.g., the at least one processor 1620, etc.), the at least one processor 1620 executes the special purpose program instructions, thereby transforming the at least one processor 1620 into a special purpose processor.

In at least one example embodiment, the memory 1610 may be a non-transitory computer-readable storage medium and may include a random access memory (RAM), a read only memory (ROM), and/or a permanent mass storage device such as a disk drive or a solid state drive. Stored in the memory 1610 is program code (e.g., computer readable instructions) related to operating the UE 140.

The communication interface 1630 may be a transceiver for transmitting wireless signals (e.g., radio signals) to radio access network elements of an access network (e.g., a radio access network element of a RAN) and/or receiving wireless signals from radio access network elements. The wireless signals (e.g., radio signals) may carry communications, such as voice, electronic mail (email), text message, multimedia data, and/or machine data. In an embodiment, at least some of the processes described herein may be carried out by an apparatus comprising means for carrying out at least some of the described processes. Means for performing method steps as disclosed herein may include software and/or hardware components of the UE 140. For example, the processor 1620, the memory 1610, and the computer program code form means for carrying out the method or methods as disclosed herein, and any of the embodiments thereof. At least one other example embodiment may include a computer program including program segments or instructions that, when executed by at least one processor of a system or an apparatus, cause the system or the apparatus to perform the method or methods disclosed herein.

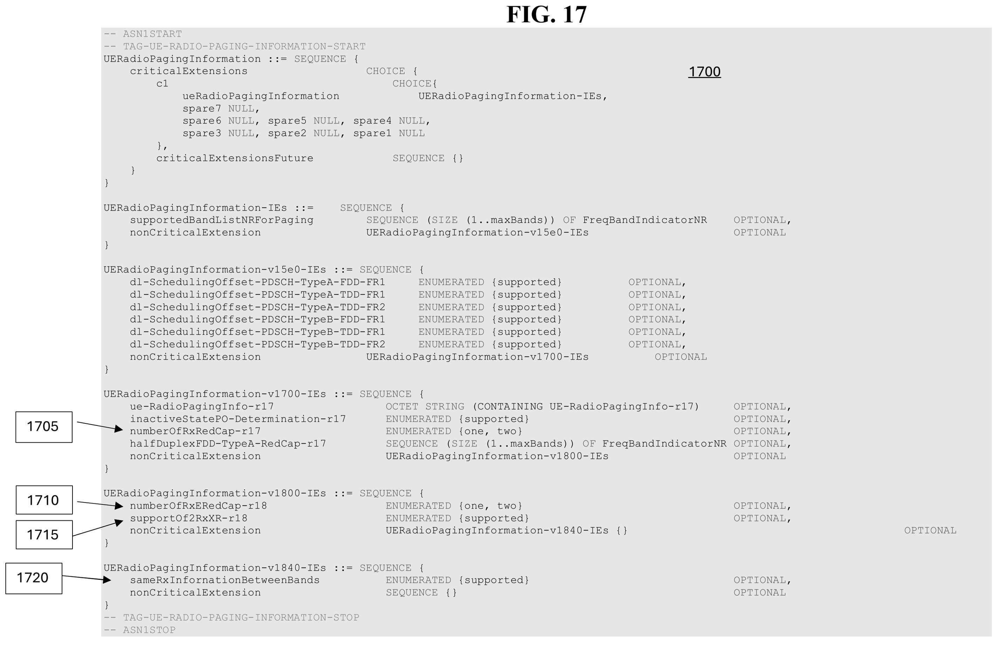

FIG. 17 is pseudo code illustrating a message indicating support information in accordance with an example implementation.

Referring to FIG. 17, an example implementation of the message described with reference to FIGS. 3-5, and 6-15 is shown according to at least one example embodiment. Referring to FIG. 3-5 and FIG. 17, in at least one example, a radio access network element (e.g., the first radio access network element 110) may include support information 1720 indicating one or more receive capabilities supported by a user equipment (UE) for one or more frequency bands supported by the UE in the message 1700. The first radio access network element may insert or include, based on UE capability information, whether the receiver information is consistent or different across the one or more frequency bands (sameRxInformationBetweenBands) as the support information 1720, but example embodiments are not limited thereto. For example the field sameRxInformationBetweenBands 1720 in the message 1700 may indicate whether the numberofRxRedCap 1705, numberOfRxERedCap 1710, and/or supportOf2RxXR 1715 is the same between the one or more frequency bands supported by the UE. In some example embodiments, the support information 1720 included or inserted in the message 1700 by the first radio access network element, based on UE capability information, may be at least one of first receiver information indicating a first number of receiver branches supported by an eRedCap UE (numberOfRxERedCap) 1710 for each of the one or more frequency bands supported by the UE; second receiver information indicating a second number of receiver branches supported by an RedCap UE (numberofRxRedCap) 1705 for each of the one or more frequency bands supported by the UE; or an indication of whether the UE is a 2Rx XR UE (supportOf2RxXR) 1715 for each of the one or more frequency bands.

In an embodiment, at least some of the processes described herein may be carried out by an apparatus comprising means for carrying out at least some of the described processes. Means for performing method steps as disclosed herein may include software and/or hardware components of the user equipment 140 and/or core network 130. For example, a processor, a memory, and computer program code form means for carrying out the method or methods as disclosed herein, and any of the embodiments thereof. At least one other example embodiment may include a computer program including program segments or instructions that, when executed by at least one processor of a system or an apparatus, cause the system or the apparatus to perform the method or methods disclosed herein.

As used herein the term "means" is to be construed in singular form, i.e., referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C.

Illustrative Embodiment 1. A first radio access network element, comprising: at least one processor; and at least one memory storing computer program code, the at least one processor, when executing the computer program code, is configured to cause the first radio access network element to, transmit a message to at least one of a second radio access network element or a core network element, wherein the message indicates support information, the support information indicating one or more receive capabilities supported by a user equipment (UE) for one or more frequency bands supported by the UE.

Illustrative Embodiment 2. The first radio access network element of illustrative embodiment 1, wherein the one or more receive capabilities comprises at least one of a number of receiver branches supported by an enhanced reduced capability (eRedCap) UE, or a reduced capability (RedCap) UE and information on whether the UE is a 2Rx XR UE.

Illustrative Embodiment 3. The first radio access network element of illustrative embodiments 1 or 2, wherein the at least one processor is configured to cause the first radio access network element to send paging messages to the UE according to the one or more receive capabilities supported by the UE for the one or more frequency bands supported by the UE.

Illustrative Embodiment 4. The first radio access network element of any one of illustrative embodiments 1-3, wherein the at least one processor is configured to cause the first radio access network element to receive the support information from the UE.

Illustrative Embodiment 5. The first radio access network element of any one of illustrative embodiments 1-4, wherein the at least one processor is configured to cause the first radio access network element to receive the support information from the second radio access network element, the second radio access network element being a base station.

Illustrative Embodiment 6. The first radio access network element of any one of illustrative embodiments 1-4, wherein the at least one processor is configured to cause the first radio access network element to receive the support information from the core network element.

Illustrative Embodiment 7. The first radio access network element of any one of illustrative embodiments 1-6, wherein the one or more receive capabilities indicates a number of receiver branches supported by the UE for the one or more frequency bands.

Illustrative Embodiment 8. The first radio access network element of any one of illustrative embodiment 1-7, wherein the message includes at least one of, first receiver information indicating a first number of receiver branches supported by the UE for each of the one or more frequency bands; second receiver information indicating a second number of receiver branches supported by the UE for each of the one or more frequency bands; or third receiver information indicating support of two receiver branch extended reality by the UE for each of the one or more frequency bands.

Illustrative Embodiment 9. The first radio access network element of illustrative embodiment 8, wherein the message includes at least one of, a first indication of whether the first receiver information is consistent across the one or more frequency bands or varies between the one or more frequency bands; a second indication of whether the second receiver information is consistent across the one or more frequency bands or varies between the one or more frequency bands; or a third indication of whether the third receiver information is consistent across the one or more frequency bands or varies between the one or more frequency bands.

Illustrative embodiment 10. The first radio access network element of illustrative embodiment 8, wherein the first number of receiver branches are receiver branches that support enhanced reduced capability by the UE, and the second number of receiver branches are receiver branches that support reduced capability by the UE.

Illustrative embodiment 11. The first radio access network element of any one of illustrative embodiments 1-10, wherein the at least one processor is configured to cause the first radio access network element to send the message to the second radio access network element.

Illustrative embodiment 12. The first radio access network element of any one of illustrative embodiments 1-10, wherein the at least one processor is configured to cause the first radio access network element to send the message to the core network element.

Illustrative embodiment 13. The first radio access network element of any one of illustrative embodiments 1-12, wherein the at least one processor is configured to cause the first radio access network element to send paging messages to the UE on the one or more frequency bands according to the message.

Illustrative embodiment 14. The first radio access network element of any one of illustrative embodiments 1-13, wherein the message is a radio paging information message.

Illustrative embodiment 15. The first radio access network element of any one of illustrative embodiments 1-14, wherein the first radio access network element is a first base station, and the second radio access network element is a second base station.

As discussed herein, the terminology "one or more" and "at least one" may be used interchangeably. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments. Further, when a particular feature, structure, or characteristic is described in connection of an embodiment, it is within the knowledge of one skilled in the art to apply such feature, structure, or characteristic in connection with other embodiments whether or not explicitly described.

For the purposes of the present disclosure, the phrases "at least one of A or B", "at least one of A and B", and "A and/or B" means (A), (B), or (A and B). For the purposes of the present disclosure, the phrase "A, B, and/or C" means (A), (B), (C), (A and B), (A and C), (B and C), or (A, B, and C).

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items. Similarly, the term "or" includes both its conjunctive and disjunctive meanings.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe a physical relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, figures shown in succession may in fact be executed substantially concurrently or may sometimes be executed in the reverse order, depending upon the functionality/acts involved.

Specific details are provided in the preceding description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures, and techniques may be shown without unnecessary detail in order to avoid obscuring example embodiments.

As discussed herein, illustrative embodiments have been described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing user equipment or other network elements and/or hardware. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently, or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other non-transitory, physical media capable of storing or instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory, and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising *(i.e.,* open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, user equipment, other network elements, or the like, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, one or more quantum hardware circuits or any other device or devices capable of responding to and executing instructions in a defined manner.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A first radio access network element, comprising:
at least one processor; and
at least one memory storing computer program code, the at least one processor, when executing the computer program code, is configured to cause the first radio access network element to,
transmit a message to at least one of a second radio access network element or a core network element, wherein the message indicates support information, the support information indicating one or more receive capabilities supported by a user equipment (UE) for one or more frequency bands supported by the UE.

2. The first radio access network element of claim 1, wherein the one or more receive capabilities comprises at least one of a number of receiver branches supported by an enhanced reduced capability (eRedCap) UE, or a reduced capability (RedCap) UE and information on whether the UE is a 2Rx XR UE.

3. The first radio access network element of claim 1, wherein the at least one processor is configured to cause the first radio access network element to send paging messages to the UE according to the one or more receive capabilities supported by the UE for the one or more frequency bands supported by the UE.

4. The first radio access network element of claim 1, wherein the at least one processor is configured to cause the first radio access network element to receive the support information from the UE.

5. The first radio access network element of claim 1, wherein the at least one processor is configured to cause the first radio access network element to receive the support information from the second radio access network element, the second radio access network element being a base station.

6. The first radio access network element of claim 1, wherein the at least one processor is configured to cause the first radio access network element to receive the support information from the core network element.

7. The first radio access network element of claim 1, wherein the one or more receive capabilities indicates a number of receiver branches supported by the UE for the one or more frequency bands.

8. The first radio access network element of claim 1, wherein the message includes at least one of,
first receiver information indicating a first number of receiver branches supported by the UE for each of the one or more frequency bands;
second receiver information indicating a second number of receiver branches supported by the UE for each of the one or more frequency bands; or
third receiver information indicating support of two receiver branch extended reality by the UE for each of the one or more frequency bands.

9. The first radio access network element of claim 8, wherein the message includes at least one of,
a first indication of whether the first receiver information is consistent across the one or more frequency bands or varies between the one or more frequency bands;
a second indication of whether the second receiver information is consistent across the one or more frequency bands or varies between the one or more frequency bands; or
a third indication of whether the third receiver information is consistent across the one or more frequency bands or varies between the one or more frequency bands.

10. The first radio access network element of claim 8, wherein the first number of receiver branches are receiver branches that support enhanced reduced capability by the UE, and the second number of receiver branches are receiver branches that support reduced capability by the UE.

11. The first radio access network element of claim 1, wherein the at least one processor is configured to cause the first radio access network element to send the message to the second radio access network element.

12. The first radio access network element of claim 1, wherein the at least one processor is configured to cause the first radio access network element to send the message to the core network element.

13. The first radio access network element of claim 1, wherein the at least one processor is configured to cause the first radio access network element to send paging messages to the UE on the one or more frequency bands according to the message.

14. The first radio access network element of claim 1, wherein the message is a radio paging information message.

15. The first radio access network element of claim 1, wherein the first radio access network element is a first base station, and the second radio access network element is a second base station.
